# DEMANDE DE BREVET EUROPEEN

(11) **EP 1 351 529 A1**
(43) Date de publication de la demande: **08.10.2003**
(21) Numéro de dépôt: 03290741.2
(22) Date de dépôt: 24.03.2003
(51) Int. Cl.: H04Q 7/22

(54) **Méthode d'établissement d'un appel de groupe dans un système de télécommunication de type GPRS**

(30) Priorité: 25.03.2002 FR 0203859
(71) Demandeur: SAGEM S.A., 75015 Paris (FR)
(72) Inventeur: Seux, Emmanuel, 95800 Cergy le Haut (FR)
(74) Mandataire: Maillet, Alain

(57) **Abrégé**

L'invention concerne une méthode d'établissement d'un appel de groupe dans un système de télécommunication de type GPRS, ledit appel étant destiné à un groupe donné d'utilisateurs. Une station de base signale ledit appel à un terminal mobile en communication en mode paquet qu'elle sert, en transmettant sur au moins un canal de signalisation relatif au dit mode paquet, au moins un message décrivant au moins ledit appel de groupe.

## Description

La présente invention concerne de manière générale une méthode d'établissement d'un appel de groupe dans un système de télécommunication du type GPRS (General Packet Radio Service).

Le système de télécommunication mobile GSM, basé sur la commutation de circuit a évolué en intégrant une technique de commutation par paquets, connue sous le nom de GPRS. Le GPRS permet notamment aux terminaux mobiles l'accès aux services Internet grâce à l'utilisation de multiples canaux radio attribués à un utilisateur ou partagés par une pluralité d'utilisateurs.

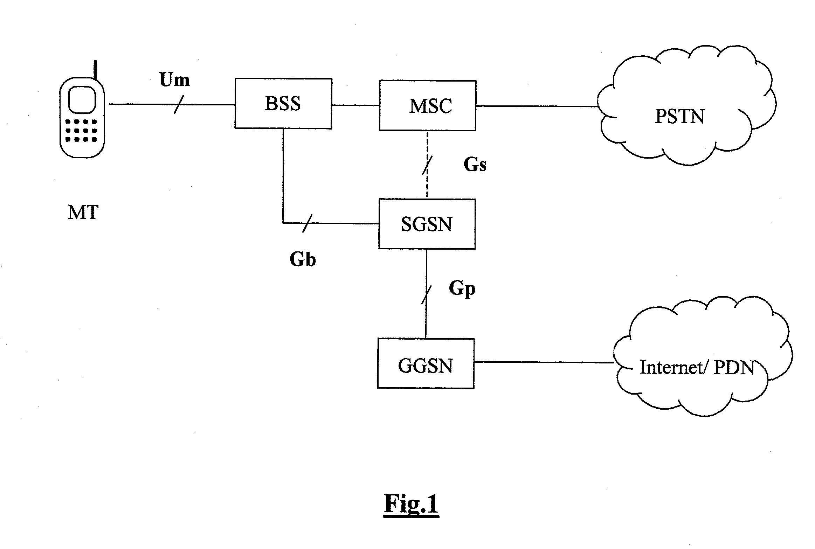

La Fig. 1 illustre de manière schématique un système de télécommunication GPRS. Le système comporte deux noeuds supplémentaires par rapport à un réseau GSM classique, à savoir les noeuds SGSN et GGSN. Le noeud SGSN (pour Serving GPRS Support Node), placé au même niveau hiérarchique que le centre de commutation MSC (Mobile Switching Center), est chargé de gérer les abonnés mobiles actifs et d'assurer le relais des paquets de données. Le noeud GGSN (pour Gateway GPRS Support Node) assure quant à lui l'interconnexion avec les réseaux de données par commutation de paquets (Packet Data Network, réseau Internet) extérieurs au réseau GSM. L'interface entre une station de base (BSS) et un noeud SGSN est conventionnellement notée Gb, celle entre un noeud SGSN et un centre MSC, Gs.

Différentes classes de terminaux mobiles (MT) sont supportées par le GPRS : la classe A permet d'accéder simultanément aux services GSM et GPRS, la classe B permet d'accéder à un instant donné soit aux services GSM soit aux services GPRS tout en autorisant la surveillance des canaux de contrôle tant GSM que GPRS, la classe C ne permet d'accéder qu'aux services GPRS. Nous considérerons par la suite uniquement les terminaux mobiles de type B, sauf indication contraire.

Le service GSM classique permet la transmission de la voix sur une liaison téléphonique point à point. La norme GSM prévoit également des liaisons point à multipoint permettant des appels de groupe. On distingue deux types d'appel de groupe, l'appel VBS (pour Voice Broadcast Service) défini dans la spécification GSM 02.69 et l'appel VGCS (pour Voice Group Call Service) défini dans la spécification GSM 02.68, toutes deux disponibles sous le site www.3gpp.org. Un appel de type VBS ou VGCS permet de transmettre un signal de voix à une pluralité d'abonnés à ces services respectifs, situés dans une zone géographique donnée. Alors que le service VBS ne permet qu'une communication unidirectionnelle, le service VGCS autorise une communication en mode half-duplex.

Un appel de groupe pour une zone géographique donnée est caractérisée par une référence d'appel de groupe dénommée GCR (pour Group Call Reference) dans le cadre du service VBS ou du service VGCS. Une référence d'appel de groupe est composée d'un identifiant de groupe d'abonnés (Group ID) et d'un identifiant de zone géographique (Group Call Area ID). La composition du Group ID et du Group Call Area ID est laissée à la discrétion de l'opérateur du réseau.

Considérons maintenant un terminal mobile dont l'utilisateur est abonné à un service d'appel de groupe. La procédure d'établissement de l'appel diffère selon que le terminal mobile est inactif ou en communication.

Lorsque le mobile est inactif, il est averti d'un appel incident au moyen d'un message de « Paging Request » comme défini au paragraphe 9.1.22 de la spécification TS 04.08 de la norme GSM. Ce message est transmis par le réseau au mobile sur le canal de signalisation commun CCCH (Common Control CHannel). Il contient d'une part un numéro de liste de notification ou NLN (pour Notification List Number) et un niveau de priorité tel que prévu dans le service de préemption et de précédence eMLPP (pour enhanced Multi-Level Precedence and Pre-emption) défini dans la spécification 3G TS 22.067. Le service eMLPP comprend en fait deux parties : la possibilité d'attribuer un niveau de priorité à un appel et la possibilité pour cet appel de préempter des communications de moindre niveau de priorité. Lorsque le terminal mobile est en communication, la préemption peut entraîner ou non la déconnexion automatique de la communication en cours. Le terminal mobile ayant identifié un numéro de notification NLN au moyen du message « Paging Request », détermine s'il diffère du dernier numéro de notification précédemment reçu. Dans l'affirmative, le terminal mobile lit sur le canal NCH (Notification CHannel) la liste des références des appels de groupe correspondant au numéro de notification NLN. Plus précisément, si n appels de groupe sont présents, la séquence suivante est disponible sur le canal NCH :
NLN(start); GCR(1); GCR(2); ... ; GCR(n); NLN(end);
où NLN(start) et NLN(end) sont respectivement des marqueurs de début et de fin, codés sur 2 bits, ayant tous deux pour valeur le numéro de notification NLN courant. La séquence est transmise sur plusieurs trames TDMA. Les GCR(*i*), *i*=1,..,n sont les références des appels pour tous les groupes actifs. Le terminal mobile lit à partir du marqueur de début de liste NLN(start) jusqu'au marqueur de fin de liste NLN(end) la liste des références des appels de groupe VGCS et/ou VBS en cours. La notification indique pour chaque référence, au moyen d'un drapeau, s'il s'agit d'un appel de type VBS ou de type VGCS. La notification peut également indiquer directement pour une référence donnée, le canal de l'appel VBS ou VGCS correspondant. Une description complète du format de la notification est fournie au paragraphe 9.1.21.b de la spécification TS 04.08 de la norme GSM. A partir des références des appels de groupe actifs récupérés à partir de la notification, le terminal mobile propose à l'utilisateur de recevoir tel ou tel appel. L'utilisateur établit ou non la communication. Alternativement, et notamment en cas d'appel d'urgence, la communication pourra être automatiquement établie.

Lorsque le mobile est en communication, la procédure d'établissement d'un appel de groupe est différente. Le terminal mobile reçoit sur le canal de signalisation associé FACCH (Fast Associated Control CHannel) une notification à chaque nouvel appel de groupe. Cette notification comprend, entre autres, la référence de l'appel de groupe, le type de l'appel (VGCS, VBS) et, le cas échéant, son niveau de priorité. L'appel de groupe peut être simplement présenté par le terminal mobile à l'utilisateur ou bien, en cas d'urgence, peut préempter purement et simplement la communication en cours.

Une application importante des services d'appel de groupe est la signalisation ferroviaire. Un certain nombre de constructeurs de téléphones mobiles ont entrepris de faire évoluer la norme GSM vers une nouvelle norme dénommée GSM-R (ou GSM for Railway communications) prenant en compte les besoins spécifiques de cette signalisation. Conjointement, les sociétés ferroviaires s'efforcent de normaliser la signalisation dans le cadre du projet européen ERTMS (European Rail Traffic Management System). Un exemple typique d'appel de groupe est celui d'un appel d'urgence émis par un conducteur de train à l'intention d'une équipe de maintenance sur la voie. Cet appel doit interrompre les communications en cours et diffuser un message à tous les utilisateurs concernés. Si les spécifications actuelles de la norme GSM permettent, comme on l'a vu plus haut, de réaliser un appel de groupe (avec le cas échéant préemption des communications en cours) lorsque les terminaux mobiles appelés sont inactifs ou en mode de transmission GSM seul, rien n'est prévu en revanche lorsque lesdits terminaux sont en mode de transmission par paquets (mode GPRS).

Un des objectifs de l'invention est de prévoir une méthode d'établissement d'appel de groupe lorsque le terminal mobile est en communication en mode paquet.

Le problème est résolu par l'objet de l'invention, défini comme une méthode d'établissement d'un appel de groupe dans un système de télécommunication de type GPRS, ledit appel étant destiné à un groupe donné d'utilisateurs, selon laquelle une station de base signale ledit appel à un terminal mobile en communication en mode paquet qu'elle sert, en transmettant sur au moins un canal de signalisation relatif au dit mode paquet, au moins un message décrivant au moins ledit appel de groupe.

Selon une première variante, ledit canal de signalisation est un canal de diffusion. Selon une seconde variante, ledit canal de signalisation est un canal dédié .

Selon un premier mode de réalisation, ledit message décrit un appel de groupe en cours et contient une référence de l'appel de groupe. Ladite référence pourra comprendre un identificateur du groupe appelé ainsi qu'un identificateur de la zone dans laquelle ledit appel doit être signalé. Ledit message pourra également contenir une information caractéristique du niveau de priorité de l'appel.

Ledit message est avantageusement transmis à chaque changement d'état de l'appel de groupe.

Selon un second mode de réalisation, ledit message contient une liste des appels de groupes en cours et pour chacun d'entre eux indique une référence dudit appel de groupe. La référence de chaque appel de groupe pourra comprendre un identificateur du groupe appelé ainsi qu'un identificateur de la zone dans laquelle ledit appel doit être signalé. Ledit message pourra également contenir, pour chaque appel de groupe, une information caractéristique du niveau de priorité de l'appel.

Ledit message est avantageusement transmis à chaque changement d'état d'un desdits appels de groupe.

Enfin, lorsqu'un nouvel appel de groupe survient, un appel point à point est signalé à chaque destinataire de l'appel de groupe au moyen d'un message de paging.

Les caractéristiques de l'invention mentionnées ci-dessus, ainsi que d'autres, apparaîtront plus clairement à la lecture de la description suivante de modes de réalisation, ladite description étant faite en relation avec les dessins joints, parmi lesquels :
La Fig. 1 illustre schématiquement un système de télécommunication GPRS ;
Les Figs. 2A et 2B illustrent schématiquement une procédure d'établissement d'un appel de groupe entrant en mode GPRS, selon un exemple de réalisation de l'invention.

Considérons à nouveau un terminal mobile MS de classe B dans un système de télécommunication GPRS.

Si le terminal mobile est inactif, il sera averti d'un appel de groupe incident au moyen d'un message de « Paging Request » sur le canal CCCH comme dans l'état de la technique. Si le mobile entre dans une zone où des appels de groupe sont en cours, il pourra en prendre connaissance en lisant la séquence des références des appels sur le canal NCH.

Si le terminal mobile est en communication en mode paquet (mode GPRS), par exemple s'il est en cours de navigation sur Internet ou de téléchargement FTP d'un fichier, on pourrait envisager que le terminal mobile passe périodiquement en mode circuit pour aller lire le message «Paging Request » sur le canal CCCH et le cas échéant, les références des appels de groupe GCR sur le canal NCH. Ce mode de fonctionnement aurait cependant pour effet l'interruption de la communication en mode paquet et donc la perte de blocs de données, perte d'autant plus importante que la notification sur le canal NCH s'étend sur plusieurs trames TDMA.

Afin d'éviter cet inconvénient, il est proposé selon l'invention de transmettre sur un canal de signalisation relatif au mode paquet (GPRS), avantageusement sur le canal de diffusion PNCH (Packet Notification Channel) ou sur le canal dédié PACCH, un message permettant au terminal mobile de reconstruire la liste des appels de groupe, c'est-à-dire la liste des groupes actifs dans la zone où se trouve le terminal mobile. Ce message est transmis par le noeud SGSN au terminal mobile.

Selon un premier mode de réalisation, ledit message est relatif à un groupe donné et n'est transmis qu'en cas de changement de l'état (inactif/actif et actif/inactif) de ce groupe, autrement lorsqu'il est appelé ou lorsque l'appel de groupe prend fin. Le terminal mobile peut donc tenir à jour une liste des groupes actifs/ inactifs. Un tel message sera dénommé ci-après «Packet Notification Group ».

Typiquement, un message «Packet Notification Group » comprendre les informations suivantes :
- l'en-tête IEI (Information Element Identifier) identifiant une référence d'appel de groupe ;
- la référence du groupe (GCR) ;
- le type d'appel de groupe (VBS ou VGCS) ;
- le niveau de priorité de l'appel (eMLPP) ;
- le mode de confirmation de l'appel de groupe : le réseau pourra par exemple demander un acquittement de l'appel en question. Le terminal transmettra alors un acquittement lorsque la communication en mode circuit sera établie ;
- de manière optionnelle le type de cryptage utilisé dans le canal de voix. Le terminal mobile utilise cette information pour décrypter le signal de voix après établissement de la communication en mode circuit.
- une information de statut indiquant si le groupe est actif ou non.

Selon un second mode de réalisation, ledit message contient l'état de tous les groupes dans la zone considérée. Le terminal mobile peut ainsi connaître directement la liste des appels en cours. Avantageusement, le message pourra être constitué d'une concaténation de messages élémentaires «Packet Notification Group» pour les groupes en question. Un tel message composite sera dénommé ci-après «Packet Notification List ».

Dans le premier comme dans le second mode de réalisation, lorsque le terminal mobile passe d'une communication en mode circuit (GSM) à une communication en mode paquet (GPRS) ou d'un état inactif à une communication en mode paquet, il connaît au moment du basculement, l'état des différents groupes présents dans la zone où il se trouve. Après basculement, il peut suivre au moyen des messages « Packet Notification Group » ou « Packet Notification List » l'état des groupes pendant la communication en mode paquet.

Avantageusement, les messages «Packet Notification Group» ou « Packet Notification List » ne seront pris en compte par le terminal mobile qu'en cas de souscription au service VBS/ VGCS.

S'il a été souscrit au service en question le terminal mobile prendra en compte les messages « Packet Notification Group » ou « Packet Notification List » dans les cas suivants :
- un appel de groupe de type VBS/VGCS survient alors que le terminal mobile est dans une zone géographique donnée. Le terminal est en communication en mode paquet lorsque l'appel incident survient;
- un appel de groupe de type VBS/VGCS est déjà établi dans une zone donnée et le terminal mobile, qui est en communication en mode paquet, pénètre dans ladite zone.

Selon une variante de réalisation, un message « Packet Paging Request » tel que défini pour un appel point à point au paragraphe 11.2 .10 de la spécification TS 04.60 de la norme GSM sera transmis lorsqu'un un appel de groupe survient. Ainsi, le terminal mobile pourra distinguer le cas d'un appel de groupe incident (message « Packet Paging Request » présent) du cas où il pénètre dans une zone où un appel de groupe est déjà en cours (message « Packet Paging Request » absent). La norme prévoit qu'un message « Packet Paging Request » est envoyé sur le canal PAACH (Packet Associated Control CHannel) lorsqu'un terminal mobile est en communication en mode paquet et que l'on veut lui signaler un appel point à point.

L'envoi des messages « Packet Paging Request » suppose que des pseudo appels point à point vers tous les terminaux mobiles supportant le service VBS/VGCS soient signalés.

Il convient de rappeler qu'un message « Packet Paging Request » comprend les informations suivantes :
- le numéro de notification NLN
- l'identificateur temporaire d'abonné pour une communication en mode paquet PTMSI (Packet Temporary Mobile Subscriber Identity)
- l'identificateur temporaire d'abonné pour une communication en mode circuit TMSI (Temporary Mobile Subscriber Identity)
- le niveau de priorité de l'appel incident (eMLPP)

Lorsqu'un appel de groupe est détecté par un terminal mobile, qu'il s'agisse d'un appel incident, ou que le terminal mobile pénètre dans une zone où un appel de groupe est déjà établi, l'appel est proposé à l'utilisateur. Ce dernier est libre d'accepter ou de refuser l'appel. S'il le refuse la communication en mode paquet est poursuivie normalement. A l'inverse, s'il l'accepte, la communication en mode paquet est suspendue et une communication en mode circuit est établie avec l'auteur de l'appel de groupe. Au terme de la communication en mode circuit, le transfert en mode paquet pourra reprendre son cours.

Selon une variante, si l'appel détecté est de priorité inférieure à celle de la communication en mode paquet en cours, l'appel pourra être masqué. A l'inverse, si l'appel de groupe détecté est de priorité supérieure à celle de ladite communication, par exemple s'il s'agit d'un appel d'urgence, les ressources de la communication pourront être automatiquement préemptées et la communication en mode circuit établie.

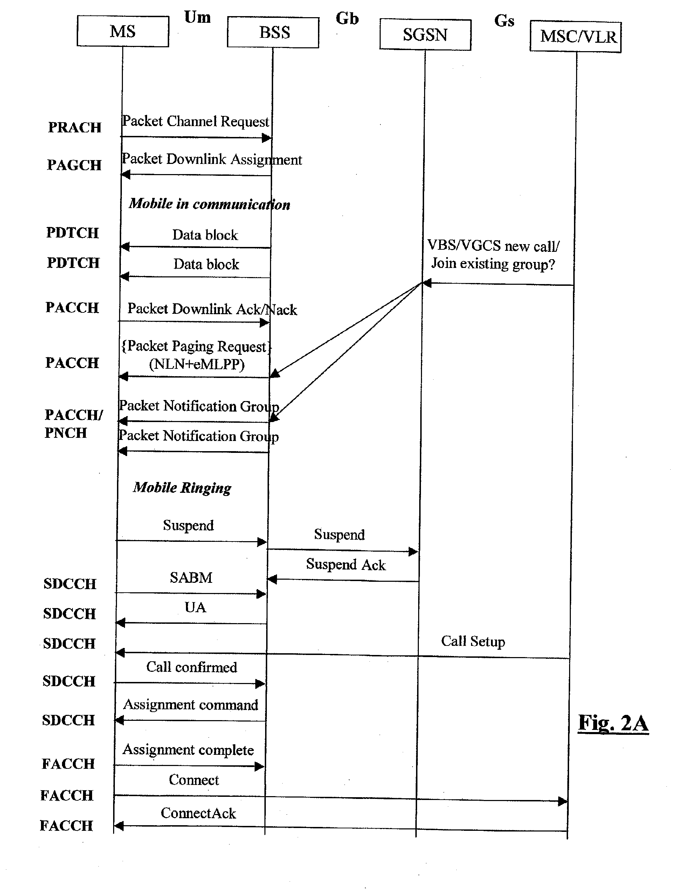

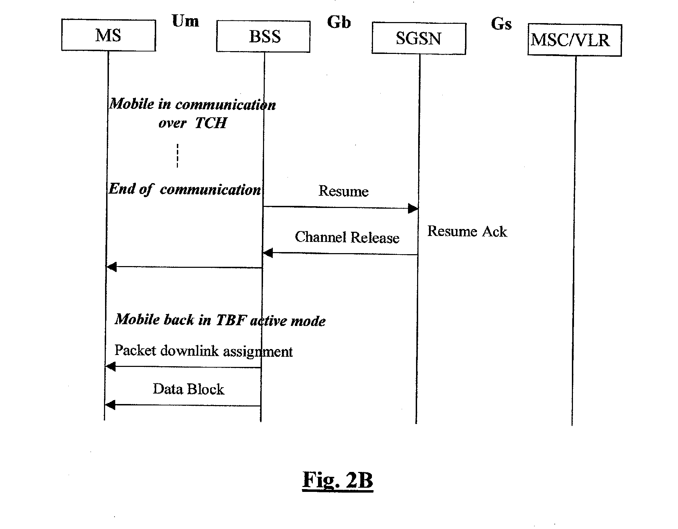

Les Figs. 2A et 2B illustrent la procédure d'établissement d'un appel de groupe lorsque le terminal mobile est en communication en mode paquet et plus précisément les échanges de messages entre le terminal mobile MS, la station de base BSS, le noeud SGSN et le centre MSC. On a fait figurer à gauche des figures les différents canaux GPRS utilisés. On trouvera une description des différents canaux dans la spécification 3GPP TS 03.64 de la norme.

On a rappelé pour mémoire en haut de la Fig. 2A la procédure d'établissement d'un communication en mode paquet. Si l'appel est à l'initiative du terminal mobile une requête « Packet Channel Request » est transmis sur le canal PRACH (Packet Random Acess Channel) pour demander un accès paquet. La station de base retourne au terminal mobile sur le canal PAGCH (Packet Access Grant Channel) un message d'allocation de ressources. La communication en mode paquet est alors établie et les paquets sont transmis par la station de base sur le canal dédié PDTCH (Packet Data Traffic Channel). A chaque réception de paquet, le terminal renvoie un message d'acquittement sur le canal de signalisation associé PAACH (Packet Associated Control Channel).

Si un appel de groupe VBS/ VGCS survient, le noeud SGSN en est averti via le centre MSC. Le noeud SGSN demande alors à la station de base de transmettre sur le canal PACCH ou PNCH de transmettre le ou les messages « Packet Notification Group » correspondants. Alternativement, la station de base concaténera les messages « Packet Notification Group » sous la forme d'un message unique « Packet Notification List » ainsi qu'on l'a vu plus haut.

Si un appel de groupe VBS/VGCS est déjà établi dans une zone donnée et que le terminal mobile pénètre dans cette zone, ce dernier sera averti de l'appel de groupe à partir de la lecture des messages « Packet Notification Group» ou « Packet Notification List » locaux.

Un appel de groupe incident sera avantageusement distingué de celui de la prise d'un appel de groupe établi : dans le premier cas la station de base signale à chaque terminal mobile concerné (utilisateur ayant souscrit au service VBS/ VGCS et en communication en mode paquet) un pseudo appel point à point en transmettant un message « Packet Paging Request » sur le canal PACCH correspondant. Le mobile recevant ce message sait que l'appel de groupe est incident.

Une fois l'appel de groupe détecté, celui-ci est présenté à l'utilisateur au moyen d'un avertissement sonore et/ou visuel. Comme on l'a vu plus haut cette présentation pourra être conditionnée par la comparaison des niveaux de priorité respectifs de l'appel et de la communication en cours.

Si l'utilisateur décide d'accepter l'appel de groupe, une requête en suspension du transfert des paquets est envoyé par le terminal mobile à la station de base qui elle même la répercute au noeud SGSN. Les paquets à destination du terminal sont alors bufferisés. L'établissement de la communication en mode circuit se fait par l'émission d'une commande SABM (Set Asynchronous Balanced Mode) suivie d'une réponse UA (Unumbered Acknowledgement) sur le canal SDCCH (Stand-Alone Dedicated Channel). Les ressources sont allouées par la station de base au moyen d'une commande « Assignment command » sur ce même canal. Un acquittement « Assignment acknowledge » est ensuite transmis par le terminal mobile sur le canal FACCH. La liaison est établie par l'envoi à la station de base d'un message « Connect » sur le canal FACCH et le retour d'un acquittement correspondant « ConnectAck ». La communication en mode circuit emprunte le canal TCH (Traffic Channel) de manière conventionnelle.

Au terme de la communication en mode circuit, une procédure de reprise de la communication en mode paquet suspendue est lancée par la station de base. A cette fin elle transmet un message « Résume » au noeud SGSN qui lui retourne un acquittement de libération de canal « Channel Release », répercuté au terminal mobile. Les ressources pour la communication en mode paquet sont alors réallouées par la station de base au moyen d'un message « Packet downlink assignment » et le transfert en mode paquet peut reprendre son cours (Temporary Block Flow actif) au point où il avait été suspendu.

On notera que les procédures de suspension de la communication en mode paquet, d'établissement de la communication en mode circuit et de reprise sont identiques à celles mises en oeuvre lorsque survient un appel incident point à point.

## Revendications

1. Méthode d'établissement d'un appel de groupe dans un système de télécommunication de type GPRS, ledit appel étant destiné à un groupe donné d'utilisateurs, **caractérisée en ce qu'**une station de base signale ledit appel à un terminal mobile en communication en mode paquet qu'elle sert, en transmettant sur au moins un canal de signalisation relatif au dit mode paquet, au moins un message décrivant au moins ledit appel de groupe .

2. Méthode d'établissement d'un appel de groupe selon la revendication 1, **caractérisée en ce que** ledit canal de signalisation est un canal de diffusion (PNCH).

3. Méthode d'établissement d'un appel de groupe selon la revendication 1, **caractérisée en ce que** ledit canal de signalisation est un canal dédié (PACCH).

4. Méthode d'établissement d'un appel de groupe selon l'une des revendications précédentes, **caractérisée en ce que** ledit message décrit un appel de groupe en cours et contient une référence (GCR) de l'appel de groupe.

5. Méthode d'établissement d'un appel de groupe selon la revendication 4, **caractérisée en ce que** ladite référence comprend un identificateur (Group ID) du groupe appelé ainsi qu'un identificateur de la zone (Group Call ID) dans laquelle ledit appel doit être signalé.

6. Méthode d'établissement d'un appel de groupe selon la revendication 4 ou 5, **caractérisée en ce que** ledit message contient une information caractéristique (eMLPP) du niveau de priorité de l'appel.

7. Méthode d'établissement d'un appel de groupe selon l'une des revendications précédentes, **caractérisée en ce que** ledit message est transmis à chaque changement d'état de l'appel de groupe.

8. Méthode d'établissement d'un appel de groupe selon l'une des revendications 1 à 3, **caractérisée en ce que** ledit message contient une liste des appels de groupes en cours et pour chacun d'entre eux indique une référence (GCR) dudit appel de groupe.

9. Méthode d'établissement d'un appel de groupe selon la revendication 8, **caractérisée en ce que** la référence de chaque appel de groupe comprend un identificateur (Group ID) du groupe appelé ainsi qu'un identificateur de la zone (Group Call ID) dans laquelle ledit appel doit être signalé.

10. Méthode d'établissement d'un appel de groupe selon la revendication 8 ou 8, **caractérisée en ce que** ledit message contient pour chaque appel de groupe, une information caractéristique (eMLPP) du niveau de priorité de l'appel.

11. Méthode d'établissement d'un appel de groupe selon l'une des revendications 8 à 10, **caractérisée en ce que** ledit message est transmis à chaque changement d'état d'un desdits appels de groupe.

12. Méthode d'établissement d'un appel de groupe selon l'une des revendications précédentes, **caractérisée en ce que** lorsqu'un nouvel appel de groupe survient, un appel point à point est signalé à chaque destinataire de l'appel de groupe au moyen d'un message de paging.
